# EUROPEAN PATENT APPLICATION

(11) **EP 4 748 559 A1**
(43) Date of publication of application: **27.05.2026**
(21) Application number: 25198908.3
(22) Date of filing: 29.08.2025
(51) Int. Cl.: B29C 70/44, B29C 70/86, B29C 33/00, B29C 43/00, B29C 65/00

(54) **SYSTEMS AND METHODS FOR BONDING MATERIALS USING EXPANDABLE TOOLING**

(30) Priority: 22.11.2024 US 202418956859
(71) Applicant: The Boeing Company, Arlington, VA 22202 (US)
(72) Inventor: Wang, Xiaoxi, Arlington, VA, 22202 (US); Soderlund, Tim H., Arlington, VA, 22202 (US); Tracey, Ashley C., Arlington, VA, 22202 (US)
(74) Representative: Hoffmann Eitle

(57) **Abstract**

A method (1000) for bonding materials (202) includes steps of: (1) enclosing (1002) at least a portion of a first material (204) and a second material (206) within an interior volume (116) of a constraining container (110); (2) expanding (1008) an expandable medium (120) disposed within the interior volume; (3) applying (1010) a positive pressure (124) to the constraining container and at least one of the first material and the second material in response to expanding the expandable medium; and (4) bonding (1012) the first material and the second material together.

## Description

### FIELD

The present disclosure relates generally to material bonding and, more particularly, to systems and methods for bonding materials using expandable tooling.

### BACKGROUND

Various bonding techniques are used to bond materials together during manufacture or assembly. For many bonding techniques, heat and/or pressure are applied to the materials to facilitate bonding. Often, the equipment required for sufficient bonding temperatures and pressures is large, complex, and expensive. Furthermore, traditional bonding techniques can lead to bottlenecks in the manufacturing process. Accordingly, those skilled in the art continue with research and development efforts in systems and methods for bonding materials.

### SUMMARY

Disclosed are examples of a system for bonding materials, a method for bonding materials, and a bonded workpiece. The following is a non-exhaustive list of examples, which may or may not be claimed, of the subject matter according to the present disclosure.

In an example, the disclosed system includes a constraining container and an expandable medium. The constraining container includes a base and a cover. The constraining container has an interior volume. The constraining container is configured to enclose at least a portion of a first material and a second material being bonded. The expandable medium is configured to be disposed within the interior volume between at least a portion of the constraining container and at least one of the first material and the second material. The expandable medium is configured to expand such that the expandable medium applies positive pressure to the constraining container and at least one of the first material and the second material.

In an example, the disclosed method includes steps of: (1) enclosing at least a portion of a first material and a second material within an interior volume of a constraining container; (2) expanding an expandable medium disposed within the interior volume; (3) applying a positive pressure to the constraining container and at least one of the first material and the second material in response to expanding the expandable medium; and (4) bonding the first material and the second material together.

In an example, the disclosed workpiece includes a first material and a second material to be bonded together. At least a portion of the first material and the second material is enclosed by a constraining container. An expandable medium is disposed within an interior volume of the constraining container between the constraining container and at least one of the first material and the second material. The expandable medium is configured to expand to a predetermined volume when a predetermined change is produced in an attribute of the expandable medium such that the expandable medium applies positive pressure to the constraining container and at least one of the first material and the second material.

Other examples of the system, the method, and the bonded workpiece will become apparent from the following detailed description, the accompanying drawings, and the appended claims.

### BRIEF DESCRIPTION OF THE DRAWINGS

Figs. 1A and 1B, hereinafter referred to as Fig. 1, are a schematic block diagram of an example of a system for bonding materials;
Fig. 2 is a flow diagram of an example of a method for bonding materials;
Fig. 3 is a schematic, sectional view of an example of a constraining container of the system applied to an example workpiece;
Fig. 4 is a schematic, sectional view of an example of the system shown in Fig. 3 with an expandable medium disposed within an interior volume of the constraining container;
Fig. 5 is a schematic, sectional view of an example of the system shown in Fig. 4 after expansion of the expandable medium;
Fig. 6 is a schematic, sectional view of an example of the constraining container of the system applied to another example workpiece;
Fig. 7 is a schematic, sectional view of an example of the system shown in Fig. 6 with the expandable medium disposed within the interior volume of the constraining container;
Fig. 8 is a schematic, sectional view of an example of the system shown in Fig. 7 after expansion of the expandable medium;
Fig. 9 is a schematic, sectional view of another example of the constraining container of the system applied to an example workpiece;
Fig. 10 is a schematic, sectional view of an example of the system shown in Fig. 9 with the expandable medium disposed within the interior volume of the constraining container;
Fig. 11 is a schematic, sectional view of an example of the system shown in Fig. 10 after expansion of the expandable medium;
Fig. 12 is a schematic illustration of an example of a portion of a workpiece assembly including a workpiece to be bonded and an expandable material;
Fig. 13 is a schematic illustration of an example of a portion of a workpiece assembly including a workpiece to be bonded and an expandable material;
Fig. 14 is a schematic illustration of an example of a portion of a workpiece assembly including a workpiece to be bonded and an expandable material;
Fig. 15 is a schematic illustration of an example of a portion of a workpiece assembly including a workpiece to be bonded and an expandable material;
Fig. 16 is a flow diagram of an example of an aircraft manufacturing and service method; and
Fig. 17 is a schematic block diagram of an example of an aircraft.

### DETAILED DESCRIPTION

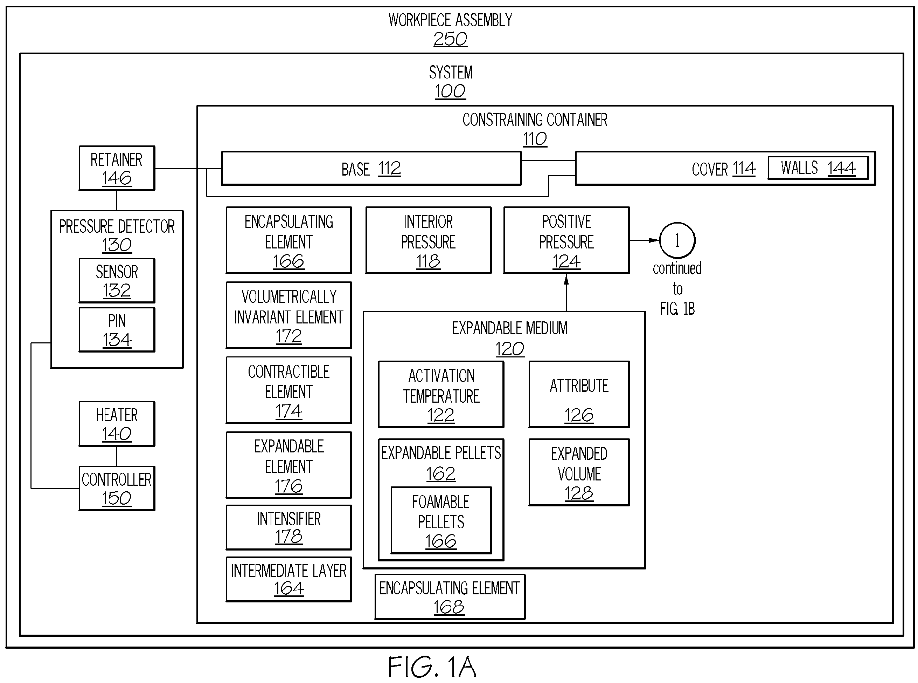

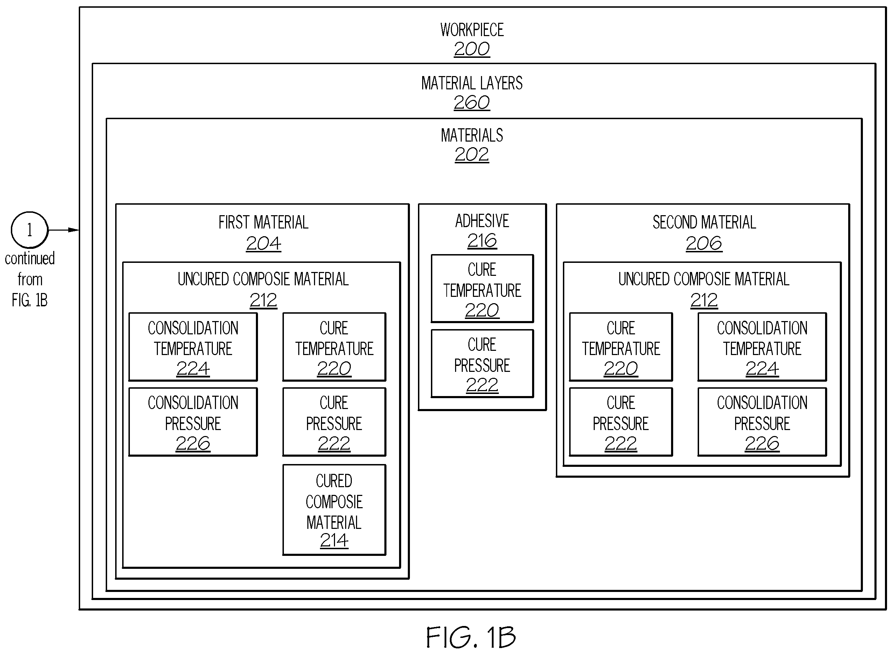

Referring generally to Figs. 1-15, by way of examples, the present disclosure is directed to a system 100, a workpiece 200 (e.g., used to form a bonded structure), and a method 1000 for bonding. In various examples, the system 100 and method 1000 provide bonding that achieves high quality bonded structures, without requiring treatment within an autoclave or other large, high capital equipment. The bonding process enabled by the system 100 and/or according to the method 1000 facilitates cheaper, faster, and smaller footprint bonding.

Examples of the system 100 and method 1000 utilize expandable materials and associated tooling that enables out-of-autoclave manufacturing and/or repair for autoclave-quality bonded parts. Examples of the system 100 and method 1000 advantageously facilitate the application of omnidirectional and at least approximately uniform pressure on surfaces of components to be bonded. Examples of the system 100 and method 1000 also advantageously enable uses of expandable materials for structural bonding and debulking, with or without adhesives.

Examples of the system 100 and method 1000 utilize expandable materials for composite structural bonding and debulking, such as secondary bonding, with or without adhesive, such as for composite bonding under pressure (e.g., co-bonding), where at least one component of a bonded structure is pre-cured. Additionally, examples of the system 100 and method 1000 enable bonding of non-composite materials (e.g., metal, metallic alloy, ceramic, polymer, hybrid, metal matrix composites (MMC), ceramic matrix composites (CMC), polymer matrix composites (PMC), etc.) by using epoxy adhesive or any polymer adhesive (e.g., thermoset or thermoplastic). Examples of the system 100 and method 1000 utilize gradual and controllable compaction with detectors to monitor real-time pressure. In various examples, the detector can be sensors or strain gauges that monitor deformation of the pins. In various examples, the detectors are pins. In either of these examples, an alarming mode is activated upon failure (e.g., breakage) of the pin.

Referring now to Figs. 1 and 3-15, the following are examples of the system 100, according to the present disclosure. Examples of the system 100 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

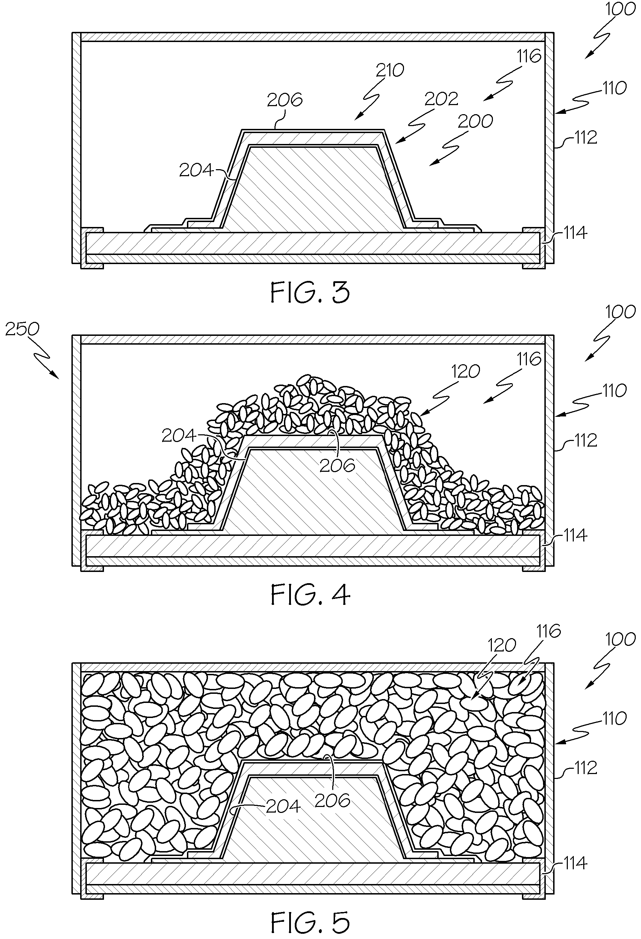

Figs. 3-15 illustrate various examples of the system 100 depicted in use to bond at least a portion 210 (Figs. 3, 6 and 9) of a workpiece 200. Generally, the portion 210 of the workpiece 200 refers to any portion or an entirely of the workpiece 200 to be bonded or being bonded using the system 100 and/or method 1000.

As illustrated in Figs. 1 and 3-15, in one or more examples, the workpiece 200 includes a first material 204 and a second material 206. In one or more examples, the workpiece 200 can also include any other number of materials 202, including base materials, material layers, components, accessories, and the like, which are to be bonded together.

Figs. 3-15 illustrate various examples of the workpiece 200 and examples of the materials 202 that are to be bonded together using the system 100 and/or according to the method 1000. The workpiece 200 can include any suitable number of the materials 202 or material layers. In various examples, the workpiece 200 includes one or more composite materials, metallic materials, ceramic materials, polymer materials, thermoplastic materials, thermosetting materials, fiber reinforcement materials, and/or any other suitable materials depending on the desired properties for the bonded structure.

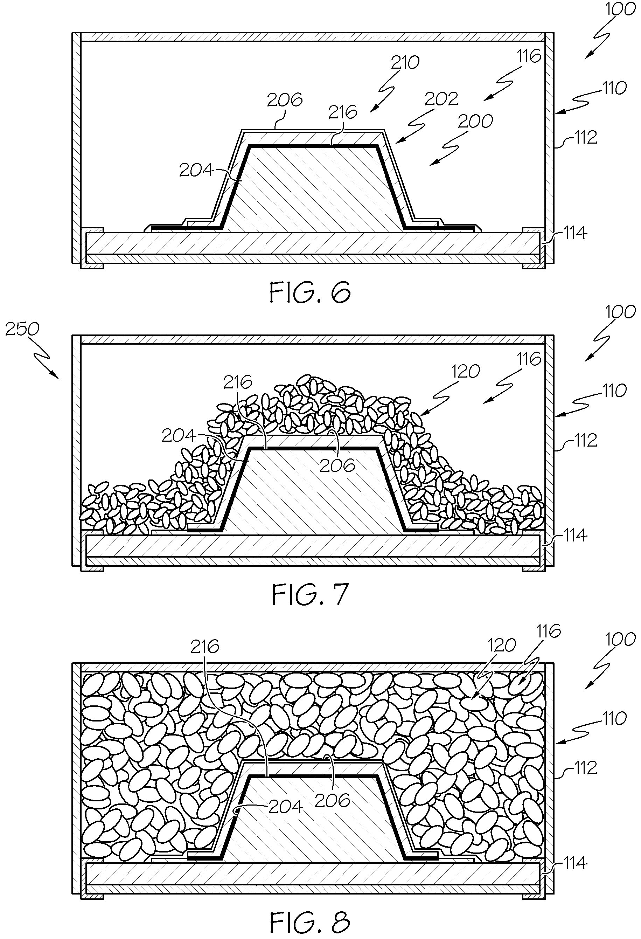

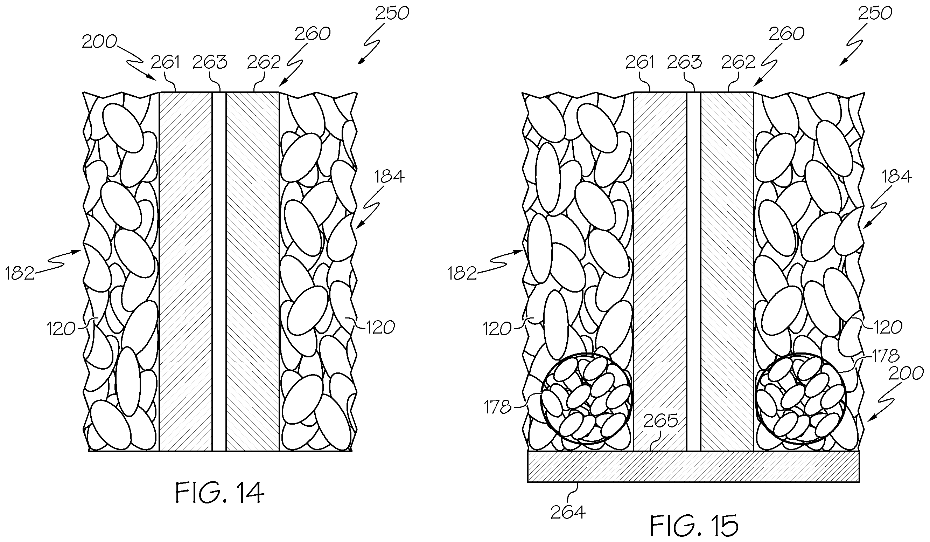

The workpiece 200 can have any suitable one of various different cross-sectional geometries. As illustrated in Figs. 3-11, in one or more examples, the workpiece 200 is a composite stiffener (e.g., a hat-shaped stringer) and the materials 202 includes a number of composite layers (e.g., uncured composite materials) and, optionally, adhesive layers (e.g., Figs.6-8), that are bonding together using expansion of an expandable medium 120 to apply pressure and to the workpiece 200. As illustrated in Figs. 14 and 15, in one or more examples, the workpiece 200 is a composite stiffener (e.g., a blade stringer) and the materials 202 include a number of composite layers (e.g., uncured composite materials and/or cured composite materials) and, optionally, adhesive layers, that are bonded together using expansion of the expandable medium 120.

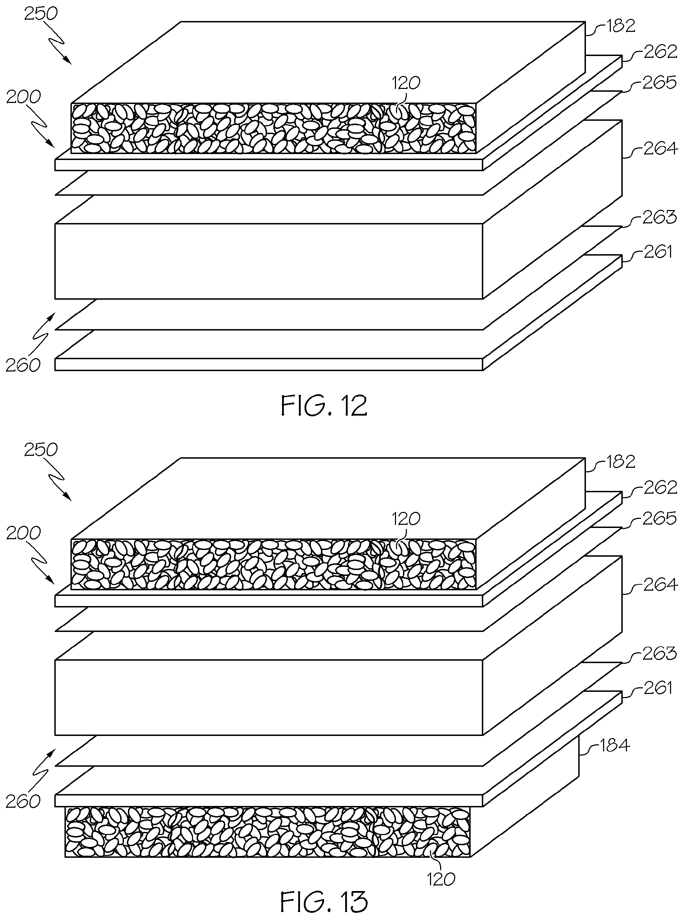

In one or more examples, the workpiece 200 includes a number of layers of the materials 202 (e.g., material layers 260) that are bonded together using expansion of the expandable medium 120 to apply pressure to the workpiece 200. As illustrated in Figs. 12-15, in one or more examples, the workpiece 200 is a sandwich structure or multi-layer panel structure that is bonded together and that includes some combination (e.g., two or more) of a first material layer 261 (e.g., a first sheet or charge of material), a second material layer 262 (e.g., a second sheet or charge of material), a third material layer 263 (e.g., bonding layer, such as an uncured pre-impregnated composite ply or an adhesive film), a fourth material layer 264 (e.g., an optional core in Figs. 12 and 13 or a base panel in Fig. 15), and a fifth material layer 265 (e.g., (e.g., bonding layer, such as an uncured pre-impregnated composite ply or an adhesive film).

In one or more examples, the expandable medium 120 can be situated or positioned relative to the workpiece 200 such that a positive pressure 124 (e.g., an omni-directional force) is applied to one side of the workpiece 200. As illustrated in Fig. 12, in one or more examples, a first amount or first layer 182 of the expandable medium 120 is positioned over or on the stack of the material layers 260 such that expansion of the expandable medium 120 exerts the positive pressure 124 on the workpiece 200 to compress the material layers 260 during bonding. As illustrated in Fig. 13, in one or more examples, a first amount or first layer 182 of the expandable medium 120 is positioned over or on the stack of the material layers 260 and a second amount or second layer 184 of the expandable medium 120 is positioned under or below the stack of the material layers 260 such that expansion of the expandable medium 120 exerts the positive pressure 124 on the workpiece 200 to compress the material layers 260 during bonding.

As illustrated in Figs. 1 and 3-11, in one or more examples, the system 100 includes a constraining container 110 and the expandable medium 120. The constraining container 110 contains or encloses at least a portion of the workpiece 200. The constraining container 110 also contains the expandable medium 120. The expandable medium 120 is configured to expand and, upon expansion, exert an omni-directional force or pressure on at least the portion of the workpiece 200 enclosed by the constraining container 110.

As illustrated in Fig. 1, in one or more examples, the system 100 and method 1000 facilitate co-curing to bond the workpiece 200 together. In these examples, the materials 202 of the workpiece 200 (e.g., first material 204 and second material 206) include an uncured composite material 212. In one or more examples, the uncured composite material 212 is a thermoset composite material. In one or more examples, the uncured composite material 212 is a thermoplastic composite material.

In one or more examples, co-curing is achieved without adhesives. As an example, the workpiece 200 includes a first wet pre-preg cross-ply (e.g., first material 204) and a second wet pre-preg cross-ply (e.g., second material 206).

In one or more examples, co-curing is achieved within an adhesive (e.g., adhesive 216), such as an adhesive film. As an example, the workpiece 200 includes a first wet pre-preg cross-ply (e.g., first material 204), a second wet pre-preg cross-ply (e.g., second material 206), and an adhesive (e.g., adhesive 216) that is situated or disposed between the first and second wet pre-preg cross-plies.

As illustrated in Fig. 1, in one or more of the co-curing examples, the uncured composite material 212 (e.g., thermoset composite material) has a cure temperature 220 and a cure pressure 222. The expandable medium 120 is configured to expand when a temperature of the expandable medium 120 is raised to an activation temperature 122 that is up to the cure temperature 220 of the thermoset composite material. At the activation temperature 122, the expandable medium 120 is configured expand such that the positive pressure 124 is up to or at least the cure pressure 222.

As illustrated in Fig. 1, in one or more the co-curing examples, the uncured composite material 212 (e.g., thermoplastic composite material) has a consolidation temperature 224 and a consolidation pressure 226. The expandable medium 120 is configured to expand when a temperature of the expandable medium 120 is raised to the activation temperature 122 that is up to the consolidation temperature 224 of the thermoplastic composite material. At the activation temperature 122, the expandable medium 120 is configured expand such that the positive pressure 124 is up to the cure pressure 222.

As illustrated in Fig. 1, in one or more examples, the system 100 and method 1000 facilitate co-bonding to bond the workpiece 200 together. In these examples, at least one of the materials 202 of the workpiece 200 (e.g., first material 204) includes a cured composite material 214. At least another one of the materials 202 of the workpiece 200 (e.g., second material 206) includes the uncured composite material 212. In one or more examples, the uncured composite material 212 is the thermoset composite material. In one or more examples, the uncured composite material 212 is the thermoplastic composite material.

In one or more examples, co-bonding is achieved with an adhesive (e.g., adhesive 216), such as an adhesive film. As an example, the workpiece 200 includes a pre-cured laminate (e.g., first material 204), a wet pre-preg cross-ply (e.g., second material 206), and an adhesive (e.g., adhesive 216) that is situated or disposed between the pre-cured laminate and the wet pre-preg cross-ply.

As illustrated in Fig. 1, in one or more of the co-bonding examples, the uncured composite material 212 (e.g., thermoset composite material) has the cure temperature 220 and the cure pressure 222. The expandable medium 120 is configured to expand when a temperature of the expandable medium 120 is raised to the activation temperature 122 that is up to the cure temperature 220. At the activation temperature 122, the expandable medium 120 is configured expand such that the positive pressure 124 is up to the cure pressure 222.

As illustrated in Fig. 1, in one or more of the co-bonding examples, the uncured composite material 212 (e.g., thermoplastic composite material) has the consolidation temperature 224 and the consolidation pressure 226. The expandable medium 120 is configured to expand when a temperature of the expandable medium 120 is raised to the activation temperature 122 that is up to the consolidation temperature 224. At the activation temperature 122, the expandable medium 120 is configured to expand such that the positive pressure 124 is up to the consolidation pressure 226.

As illustrated in Fig. 1, in one or more examples, the system 100 and method 1000 facilitate secondary bonding to bond the workpiece 200 together. In these examples, the materials 202 of the workpiece 200 (e.g., first material 204 and second material 206) include any suitable materials or material combinations, such as, but not limited to, metallic materials, metallic alloy materials, ceramic materials, polymer materials, hybrid materials, metal matrix composite materials, ceramic matrix composite materials, polymer matrix composite materials, and the like.

In one or more examples, secondary bonding is achieved with an adhesive (e, g., adhesive 216), such as an adhesive film. As an example, the workpiece 200 includes a first pre-cured laminate or material layer (e.g., first material 204), a second pre-cured laminate or material layer (e.g., second material 206), and an adhesive (e.g., adhesive 216) that is situated or disposed between the first and second pre-cured laminates or material layers.

As illustrated in Figs. 6-8, in one or more examples, the adhesive 216 is situated between the first material 204 and the second material 206. In these examples, the system 100, utilizing the adhesive 216, enables secondary bonding, co-bonding, or co-curing with adhesives of the first material 204 and the second material 206.

As illustrated in Fig. 1, in one or more of the co-curing examples, co-bonding, and/or the secondary bonding examples, the adhesive 216 has at least one of the cure temperature 220 and the cure pressure 222. The expandable medium 120 is configured to expand when a temperature of the expandable medium 120 is raised to the activation temperature 122 that up to the cure temperature 220. At the activation temperature 122, the expandable medium 120 is configured to expand such that the positive pressure 124 is up to the cure pressure 222. In one or more examples, the cure temperature 220 and/or the cure pressure 222 of the uncured composite material 212 and the adhesive 216 are at least approximately the same. In one or more examples, the cure temperature 220 and/or the cure pressure 222 of the uncured composite material 212 and the adhesive 216 are different.

In examples in which the first material 204 and the second material 206 are secondarily bonded using the adhesive 216, the materials 202 of the workpiece 200 (e.g., first material 204, second material 206, etc.) can include any suitable material or combination of materials, including, but not limited to, cured composite materials (e.g., thermoset or thermoplastic composite materials), metallic materials, metallic alloy materials, ceramic materials, polymeric materials, and the like. In one or more examples, the materials 202 of the workpiece 200 are the same materials. In one or more examples, at least one of the materials 202 of the workpiece 200 are different materials.

In one or more examples, the constraining container 110 includes a base 112. In one or more examples, the constraining container 110 includes a cover 114. In one or more examples, the cover 114 is coupled to the base 112. In one or more examples, the cover 114 is configured to be coupled to the base 112. In one or more examples, the cover 114 is movable relative to the base 112. The container 110 has an interior volume 116 that is formed by the base 112 and the cover 114.

In one or more examples, the constraining container 110 is configured to enclose at least a portion (e.g., portion 210) of a first material 204 and a second material 206 of the workpiece 200, which are being bonded together. In one or more examples, the constraining container 110 is configured (e.g., sized and shaped) to contain and/or enclose an entirety of the workpiece 200. In one or more examples, the constraining container 110 is configured to contain and/or enclose a portion of the materials 202 of the workpiece 200 being bonded together.

In one or more examples, the expandable medium 120 is configured to be disposed, situated, or otherwise loaded within the interior volume 116 of the constraining container 110. In one or more examples, the expandable medium 120 is disposed, situated, or loaded between at least a portion of the constraining container 110 (e.g., cover 114 and/or base 112) and at least one of the first material 204 and the second material 206. The expandable medium 120 is configured to expand such that the expandable medium 120 applies positive pressure 124 to the constraining container 110 and at least one of the first material 204 and the second material 206.

In one or more examples, the system 100 is an adjustable tooling system that includes the constraining container 110 and the expandable medium 120. The constraining container 110 is located relative to the workpiece 200 such that at least the portion 210 of the workpiece 200 and the expandable medium 120 are positioned within or are otherwise constrained by the constraining container 110.

In one or more examples, the system 100 is configured to facilitate the application of positive pressure 124 upon the portion 210 of the workpiece 200 contained by the container 110 by expansion of the expandable medium 120 during the process of bonding the workpiece 200. As such, the constraining container 110 and the expandable medium 120 are configured for applying positive pressure 124 to the workpiece 200 during the process of bonding two or more materials together to form or fabricate a bonded structure.

In one or more examples, one or more of the materials 202 is a composite material (e.g., composite component, part, object, etc.) that includes one or more composite layers (also called plies). In one or more examples, one or more of the materials 202 is a metallic material (e.g., metallic component, part, object, etc.). In one or more examples, one or more of the materials 202 is a ceramic material (e.g., ceramic component, part, object, etc.). In one or more examples, one or more of the materials 202 is a polymeric material (e.g., polymeric component, part, object, etc.).

In any of these examples, the materials 202 are bonded together using the system 100 and/or according to the method 1000. In one or more examples, the materials 202 are adhered together by co-curing (e.g., with application of heat and/or pressure). In one or more examples, the materials 202 are adhered together by co-bonding (e.g., with application of heat and/or pressure). In one or more examples, the materials 202 are adhered together by secondary bonding (e.g., with application of heat and/or pressure).

As illustrated in Figs. 3-11, in one or more examples, the workpiece 200 is supported on or by the base 112. In one or more examples, the cover 114 is located relative to base 112 and/or the workpiece 200 such that at least the portion 210 of the workpiece 200 and the expandable medium 120 are positioned within or are otherwise constrained by the cover 114 or between the cover 114 and the base112. In one or more examples, the cover 114 includes (e.g., forms or defines) the interior volume 116 and is configured to enclose the portion 210 of the workpiece 200. The cover 114 enables the expandable medium 120 and the workpiece 200 to the loaded within the interior volume 116 of the constraining container 110.

In one or more examples, the cover 114 has or forms a cross-sectional profile that corresponds to a cross-sectional shape of the workpiece 200. Providing the cover 114 with a cross-sectional profile that corresponds to (e.g., at least approximately matches or is complementary to) the cross-sectional shape of the workpiece 200 facilitates a smaller interior volume 116 of the constraining container 110 and, thus, a reduction in the amount of the expandable medium 120 needed.

In one or more examples, the base 112 is rigid. In one or more examples, the cover 114 is rigid. In one or more examples, at least one of the base 112 and the cover 114 is rigid. In one or more examples, both the base 112 and the cover 114 are rigid.

In one or more examples, the cover 114 is substantially resistant to expansion, at least when pressure is applied on inner surfaces of the cover 114 by the expandable medium 120. In this way pressure applied to an outer surface of the workpiece 200 (e.g., at least one of the first material 204 and the second material 206) acts cooperatively with the cover 114 to generate compressive force upon the workpiece 200.

In one or more examples, at least a portion of the cover 114, such as the walls 144 of the cover 114, are rigid (e.g., hard or non-flexible) and non-expandable. In these examples, at least a portion of the cover 114, such as the walls 144, can be made out of any suitable material, including, but not limited to, metallic materials, composite materials, cement materials, ceramic materials, polymeric materials, and the like. In these examples, the walls 144 constrain the expandable medium 120 and react to the positive pressure 124 generated by the expandable medium 120 upon expanding. In these examples, the walls 144 are capable of withstanding the pressure generated within the constraining container 110 upon expansion of the expandable medium 120.

In one or more examples, at least a portion of the base 112 is flexible. In one or more examples, at least a portion of the cover 114 is flexible. In one or more examples, at least a portion of the base 112 is flexible and non-expandable. In one or more examples, at least a portion of the cover 114 is flexible and non-expandable. In one or more examples, at least a portion of at least one of the base 112 and the cover 114 is flexible and non-expandable or expandable. In one or more examples, at least a portion of both of the base 112 and the cover 114 is flexible and non-expandable or expandable. Providing at least a portion of at least one of the base 112 and the cover 114 as flexible and non-expandable enables the cover 114 and/or the base 112 to form over (e.g., more closely match) the profile shape of at least a portion of the workpiece 200 and/or the expandable medium 120 before expansion of the expandable medium 120 and/or facilitates conforming to the shape of at least a portion of the workpiece 200, resulting in a smaller interior volume 116 of the constraining container 110 and, thus, a reduction in the amount of the expandable medium 120 needed. In these examples, at least a portion of the cover 114 and/or the base 112 can be made out of any suitable flexible and non-expandable material, including, but not limited to, metallic mesh (e.g., chainmail), ceramic mesh, polymeric mesh, and the like.

In one or more examples, at least a first portion of the cover 114 is flexible and non-expandable and at least a second portion of the cover114 is rigid and non-expandable. In other examples, at least a first portion of the cover 114 is non-expandable (e.g., flexible and/or rigid) and at least a second portion of the cover 114 is expandable.

In one or more examples, the cover 114 is movable relative to the workpiece 200 such that the portion 210 of the workpiece 200 to be bonded can be selected, isolated, and/or targeted. Moving the cover 114 facilitates local bonding of discrete areas or portions of the workpiece 200. In one or more examples, the cover 114 is completely removable from the base 112. Moving the cover 114 facilitates loading or positioning the expandable medium 120 and the workpiece 200 within the interior volume 116 of the constraining container 110.

In one or more examples, the cover 114 is sized and/or has appropriate dimensions suitable to cover at least the portion 210 of the workpiece 200 to be bonded. In these examples, the dimensions (e.g., length and/or width) of the cover 114 are less than at least one of the dimensions (e.g., length and/or width) of the workpiece 200.

In one or more examples, in one or more examples, the cover 114 includes the walls 144. In one or more examples, the walls 144 form or define at least a portion of the interior volume 116 of the constraining container 110. In one or more examples, the walls 144 have or form the cross-sectional profile of the cover 114 that corresponds to the cross-sectional shape of the workpiece 200. In these examples, the expandable medium 120 is configured to be disposed within the interior volume of the cover 114 formed by the walls 144. In one or more examples, the expandable medium 120 is disposed between the walls 144 and the portion 210 of the workpiece 200 being bonded together.

In one or more examples, the workpiece 200 (e.g., portion 210) is disposed on the base 112 during the bonding process. In order for suitable compressive forces (e.g., positive pressure 124) to be applied to the workpiece 200 while it is within the constraining container 110, at least the portion 210 of the workpiece 200 being bonded may need to be well-supported. In one or more examples, the base 112 provides a substantially non-compressible surface to support one side of the workpiece 200.

In one or more examples, the base 112 is substantially resistant to compression, at least when pressure is applied on supporting surface of the base 112, which contacts and supports the workpiece 200. In this way pressure applied to a surface of the workpiece 200 acts cooperatively with the base 112 to generate compressive forces upon the workpiece 200 during bonding.

In one or more examples, the interior volume 116 of the constraining container 110 is selectively (e.g., controllably) variable. In one or more examples, at least one of the walls 144 of the cover 114 is movable to modify (e.g., reduce) the interior volume 116 of the constraining container 110. Selective modification or variation of the interior volume 116 facilitates a reduction in the interior volume 116 and a corresponding reduction in the amount of expandable medium 120 required to fill the interior volume 116 upon expansion. Selective modification or variation of the interior volume 116 also enables selective or reactive control and modification of the interior pressure 118 of the constraining container 110 (e.g., within interior volume 116 and acting on the workpiece 200.)

In one or more examples, the cover 114 includes any suitable element or feature that facilitates application and/or removal of the expandable medium 120 from the interior volume 116. In one or more examples, the cover 114 includes removable or openable panels (e.g., doors) that enable access to the interior volume 116 and application of expandable medium 120 once positioned relative to the workpiece 200.

As illustrated in Figs. 1 and 9-11, in one or more examples, the system 100 includes a pressure detector 130. The pressure detector 130 is configured for detecting the interior pressure 118 of the interior volume 116 within the constraining container 110. In one or more examples, the pressure detector 130 facilitates monitoring the interior pressure 118 of the interior volume 116 in the constraining container 110. In one or more examples, the pressure detector 130 also serves as a failsafe that limits the interior pressure 118 within the constraining container 110.

As illustrated in Figs. 1 and 9-11, in one or more examples, the pressure detector 130 includes or takes the form of a sensor 132 and is configured for detecting or otherwise determining the interior pressure 118 in the constraining container 110 and, thus, the positive pressure 124 or omni-directional force being applied to the workpiece 200 by the expandable medium 120 during and after expansion of the expandable medium 120. In these examples, the sensor 132 can include any suitable type or number of sensors, such as, but not limited to, a pressure sensor, a load sensor, a strain gauge, other sensor device, and combinations thereof.

As illustrated in Fig. 1, in one or more examples, the system 100 includes a controller 150. In one or more examples, the controller 150 receives an input signal or data from the sensor 132 such that interior pressure 118 within the constraining container 110 can be monitored and, subsequently, increased or decreased as required to achieve and/or maintain a desired magnitude for the positive pressure 124 applied to the workpiece 200 by expansion of the expandable medium 120.

In one or more examples, the controller 150 includes or takes the form of a closed-loop controller or otherwise utilizes closed-loop control of the interior pressure 118 within the constraining container 110 and/or applied to the workpiece 200 during the bonding operation. In one or more examples, the controller 150 uses real-time pressure measurements from the sensor 132 to control or adjust the interior pressure 118 within the constraining container 110 and/or applied to the workpiece 200.

In one or more examples, the interior pressure 118 is controlled by increasing or decreasing the interior volume 116 of the constraining container 110, such as by selectively changing the position of one or more of the walls 144 of the constraining container 110. In one or more examples, the interior pressure 118 is controlled by selectively expanding or contracting the expandable medium 120 within the interior volume 116. In one or more examples, the interior pressure 118 is controlled by selectively expanding or contracting an expandable element 176 also situated within the interior volume 116.

In one or more examples, expansion and/or contraction of the expandable medium 120 is selectively controllable. For example, the expandable medium 120 is configured to selectively or controllably expand and contract as a method for controlling the pressure within the constraining container 110 and/or applied to the workpiece 200 during bonding. In various examples, expansion and/or contraction of the expandable medium 120 can be controlled in any one of various ways, such as applying heat or cooling the expandable medium 120.

In one or more examples, the pressure detector 130 includes or takes the form of a failsafe mechanism configured to prevent over pressurization and/or to regulate the pressure within the interior volume 116 of the constraining container 110. As an example, the pressure detector 130 includes at least one instance of a pin 134 (e.g., shear pin) that is used to couple the cover 114 to the base 112 or to couple multiple segments or portions of the cover 114 together. In one or more examples, the pin 134 is configured to fail upon a predetermined pressure that is greater than the pressure required or desired for the bonding process, thereby releasing the cover 114 and relieving the pressure within the constraining container 110.

In one or more examples, the pressure detector 130 includes a combination of the pin 134 and the sensor 132. In these examples, the sensor 132 can be a strain gauge coupled to the pin 134 and configured to detect the deformation of the pin 134 and/or the strain or load applied to the pin 134 in response to the interior pressure 118 within the constraining container 110. In these examples, the pressure detector 130 provides real-time pressure detection and failsafe functions. In one or more examples, if a detected value (e.g., magnitude) of the pressure is higher than an alarming or threshold pressure, the system 100 is configured to initiate an automatic shut off, along with other safety measures, such as forced air cooling, release of interior pressure, and opening the constraining container 110. In one or more examples, the pin 134 is a sacrificial pin with a known failure strength, which corresponds to the alarming maximum allowable interior pressure. In these examples, if the pin 134 breaks, the system 100 will get into alarming mode. In other examples, the system 100 includes multiple layers of safety control.

As illustrated in Figs. 1 and 3-5, in one or more examples, the system 100 includes a heater 140. The heater 140 in thermal communication with the expandable medium 120. The heater 140 is configured to heat the expandable medium 120 to the activation temperature 122 in which the expandable medium 120 expands within the interior volume 116 to apply the positive pressure 124 to the workpiece 200.

In one or more examples, the heater 140 is an internal heater and is configured to be disposed within the interior volume 116 of the constraining container 110 with the expandable medium 120. In one or more examples, the heater 140 is an external heater and is configured to be disposed outside of the constraining container 110. In one or more examples, the heater 140 is integrated in the constraining container 110 and/or the expandable medium 120, for example, using smart susceptor heating elements.

The heater 140 can take any suitable form or include any suitable heating device. In various examples in which the expandable medium 120 is thermally activated to expand, the constraining container 110, such as at least the cover 114, can be heated externally. Alternatively, or in addition, the system 100 can include one or more heat-generating substances configured to heat the expandable medium 120 to a predetermined temperature at which the expandable medium 120 will expand.

In one or more examples, at least a portion of the constraining container 110, such as at least a portion of the cover 114, is thermally reflective. As an example, at least one of the walls 144 of the cover 114 is thermally reflective. In one or more examples, at least a portion of an interior surface of the cover 114 and/or the base 112 includes or is coated with a thermally reflective material. Thermal reflectivity facilitates improved heating of the expandable medium 120 to activate expansion of the expandable medium 120 during the bonding process.

As illustrated in Fig. 1, in one or more examples, the system 100 includes a retainer 146. The retainer 146 is configured to hold the constraining container 110 in a closed configuration. As an example, the retainer 146 is configured to hold the cover 114 against the base 112 or otherwise secure the base 112 and the cover 114 together during the bonding process after the workpiece 200 and the expandable medium 120 are loaded within the interior volume 116 of the constraining container 110. The retainer 146 includes any suitable mechanism capable of fixing the cover 114 relative to the base 112. In one or more examples, the retainer 146 includes at least one clamp configured to fasten or fixes the cover 114 in place relative to the base 112. The clamp can include any suitable type of clamping device and fastening device, such as, but not limited to, mechanical clamps, magnetic clamps, pneumatic clamps, spring clamps, latches, pins, fasteners, weights, and the like. The retainer 146 can include any number of clamps.

In one or more examples, the retainer 146 and the pressure detector 130 are integrated into a single component. As an example, the pin 134 can be used to secure the constraining container 110 in the closed position (e.g., hold the base 112 and the cover 114 together). Optionally, the sensor 132 can be used to detect the interior pressure 118.

As illustrated in Fig. 1, in one or more examples, the system includes at least one instance of an intermediate layer 164. In these examples, the intermediate layer 164 is situated in the interior volume 116 of the constraining container 110 with the expandable medium 120 and the workpiece 200. In one or more examples, the intermediate layer 164 is positioned between the constraining container 110 and the expandable medium 120. In one or more examples, the intermediate layer 164 is positioned between the expandable medium 120 and the workpiece 200. In one or more examples, the intermediate layer 164 is positioned in the expandable medium 120.

In one or more examples, the intermediate layer 164 includes or takes the form of the bladder. In one or more examples, the bladder is filled with a fluid (e.g., gas or liquid) and is configured to equalize the positive pressure applied to the workpiece 200 such that the positive pressure 124 is more uniformly applied. The bladder can be selected to be resistant to heat and to be readily removable after the workpiece 200 is bonded.

As illustrated in Fig. 1, in one or more examples, the expandable medium 120 is configured to expand to an expanded volume 128 when a predetermined change is produced in an attribute 126 of the expandable medium 120 such that the expandable medium 120 applies or exerts positive pressure 124 upon the workpiece 200 and the constraining container 110. Generally, the expanded volume 128 is known or is capable of being calculated based on the material composition of the expandable medium 120, the attribute 126, and/or the activation temperature 122,

In one or more examples, the expanded volume 128 of the expandable medium 120 in the expanded state is greater than the interior volume 116 of the constraining container 110. For the purpose of the present disclosure, the interior volume 116 refers to the actual available, fillable interior volume of the interior cavity of the constraining container 110. In various examples, the expanded volume 128 is substantially the same as or marginally greater than the interior volume 116 such that, upon expansion of the expandable medium 120, the expandable medium 120 applies the positive pressure 124 to the workpiece 200, unless the interior volume 116 can be changed (e.g., by moving the walls 144, controlling the expandable element 176, and the like). In one or more examples, the amount (e.g., volume) of the expandable medium 120 in an unexpanded state to be loaded within the interior volume 116 of the constraining container 110 is established by testing or models to predict the pressure during and after expansion within in the constrained volume.

The expandable medium 120 can include any one or more of various suitable types of materials or material compositions, which is configured to expand upon activation or in response to a change in at least one instance of an attribute 126. As illustrated in Fig. 1, in one or more examples, the expandable medium 120 includes expandable pellets 162. In one or more examples, the expandable pellets 162 are thermally activated at the activation temperature 122. In these examples, the expandable pellets 162 are configured to expand when the temperature of the expandable pellets 162 is raised up to the activation temperature 122.

In one or more examples, any suitable number of the expandable pellets 162 can be placed within the interior volume 116 of the constraining container 110, provided that when expanded they are able to apply the positive pressure 124 to the workpiece 200 sufficient to for bonding. The number of the expandable pellets 162 is dependent upon the size of the interior volume 116. That is, where the constraining container 110 fits more closely around the contours of the workpiece 200, the fewer number of the expandable pellets 162 may be needed.

In various examples, each one of the expandable pellets 162 can have any suitable dimensions. In one or more examples, the length of the expandable pellets 162 is less than approximately one centimeter. The expandable pellets 162 can be substantially uniform in size or can include pellets of different sizes.

In one or more examples, the activation temperature 122 of the expandable pellets 162 is less than, at least, or greater than the cure temperature 220 of the workpiece 200. In one or more examples, the activation temperature 122 of the expandable pellets 162 is less than, at least, or greater than the cure temperature 220 of the uncured composite material 212 and/or of the adhesive 216. In one or more examples, the activation temperature 122 of the expandable pellets 162 is less than, at least, or greater than the consolidation temperature 224 of the uncured composite material 212.

As illustrated in Fig. 1, in one or more examples, the expandable medium 120, such as the expandable pellets 162, includes or takes the form of foamable pellets 166. In one or more examples, the foamable pellets 166 are configured to foam when heated to at least a predetermined foaming temperature (e.g., activation temperature 122). In one or more examples, the foamable pellets 166 include a foamable material, such as a thermoplastic material treated with a blowing agent; a gas-filled balloon; hollow microspheres, a metal; any other suitable component configured to expand when heated, or any combination thereof.

As illustrated in Fig. 1, one or more examples, the expandable medium 120 includes an encapsulating element 168. In one or more examples, the expandable medium 120 is disposed within the encapsulating element 168. In one or more examples, the expandable pellets 162 are disposed in the encapsulating element 168. In one or more examples, the encapsulating element 168 encloses the expandable medium 120 (e.g., the expandable pellets 162), thereby better facilitating handling of the expandable medium 120 as well as the removal of the expandable medium 120 after bonding is complete.

The encapsulating element 168 can take any suitable form, such as an enclosed film, sealed material layer, bag, bladder, and the like. In one or more examples, the encapsulating element 168 is non-expandable. In one or more examples, the encapsulating element 168 is expandable. In one or more examples, the encapsulating element 168 is made of a woven nylon or polyester fabric (e.g., firehose material).

In one or more examples, prior to the bonding process, the expandable medium 120 is in an unexpanded state (e.g., Figs. 4, 7 and 10). In the unexpanded state, the expandable medium 120 may be referred to as unexpanded or as an unexpanded element. During the bonding process, the expandable medium 120 is caused to expand to an expanded state (e.g., Figs. 5, 8 and 11). In the expanded state, the expandable medium 120 may be referred to as expanded or as an expanded element.

In one or more examples, in the expanded state, the expandable medium 120 applies pressure to interior surfaces of the constraining container 110 (e.g., of the cover 114 and/or the base 112) and to surface of the portion 210 of the workpiece 200 (e.g., unbonded materials or components of the workpiece). In one or more examples, the expanded expandable medium 120 applies the positive pressure 124 (resulting from the expansion of the expandable medium 120) to the workpiece 200 during some or all of the bonding process to facilitate compression. In one or more examples, after the workpiece 200 has been bonded, the expandable medium 120 can be removed from the constraining container 110 prior to, simultaneously with, or after the now bonded condition of the workpiece 200 is removed from the constraining container 110.

For the purpose of the present disclosure, the term "expandable," "expand," "expanding," and similar terms refer to an ability to be expanded or having the potential or capability of increasing in size and/or volume. A substance or discrete element that is expandable may be capable of increasing in size or volume symmetrically or asymmetrically. Where the expandable substance is capable of symmetric expansion, the substance undergoes an a substantially equivalent degree of expansion along each axis. Where the expandable substance exhibits asymmetric expansion, the substance can undergo a greater relative expansion along a first axis, or first and second axes, than along a different axis. In various examples, the expandable medium 120 is configured to expand when a predetermined change is produced in the expandable medium 120. The predetermined change is typically a change in a physical property or chemical property or a combination thereof, and/or any other suitable property of the expandable medium 120 that is associated with expansion of the expandable medium 120. Unless otherwise specified, expansion of the expandable medium 120 refers to an increase in the volume of the expandable medium 120, surface area of the expandable medium 120, and/or spatial extent of the expandable medium 120 in one or more dimensions. As an example, the expandable medium 120 can be configured to expand when the temperature of the expandable medium 120 is raised from a lower temperature, such as an ambient temperature, to a predetermined higher temperature (e.g., activation temperature 122). Accordingly, in cases in which bonding of the workpiece 200 includes raising the temperature of the workpiece 200, the expandable medium 120 expands inside the interior volume 116 during the bonding process. The expandable medium 120 (e.g., while expanding or after expanded) exerts pressure against the interior of the constraining container 110 as well against or on the workpiece 200 during the bonding process.

In one or more examples, the expandable medium 120 is selected so that upon expansion within the interior volume 116 of the constraining container 110, the expandable medium 120 exerts sufficient pressure to effectively compact the materials 202 of the workpiece 200 for proper bonding. For some materials 202, an applied pressure of less than 1 atmosphere can be sufficient for bonding, while other materials 202 can be more effectively bonded at an applied pressure of 1 atmosphere or greater. In one or more examples, the expandable medium 120 is selected to exert sufficient pressure so that pressures can be applied that have typically previously required an autoclave (e.g., 1-5 atmospheres).

In one or more examples, the bonding process is simplified and facilitated by adding the expandable medium 120 as a plurality of the expandable pellets 162 (also called expandable beads). In these examples, the expandable pellets 162 are configured to undergo volumetric expansion when heated to at least the predetermined temperature (e.g., activation temperature 122).

In one or more examples, the expandable medium 120 includes one or more different types, kinds, or compositions of expandable materials (e.g., different types or compositions of the expandable pellets 162). In these examples, each one of the different types of expandable materials is configured to expand (e.g., to a predetermined volume) when heated to a predetermined temperature. In one or more examples, the composition of the different types of expandable medium 120 (e.g., different types of the expandable pellets 162) can be designed to achieve a desired relationship between the expanded volume of each of the types and the temperature of each of the types as a function of time.

In one or more examples, the extent of the expansion of a given type or composition of the expandable medium 120 (e.g., expandable pellets 162) can be measured and recorded, as can the forces generated by the expansion. The formulation of the composition can therefore be varied in order to obtain a desired degree of expansion and expansion force. In this way, the amount of expandable medium 120 (e.g., number of expandable pellets 162) and/or the composition of the expandable medium 120 (e.g., expandable pellets 162) employed can be selected such that expansion within a known enclosed volume (e.g., interior volume 116) will apply a desired pressure upon the workpiece 200 at one or more stages of the bonding process.

As illustrated in Fig. 1, in one or more examples, the system 100 includes additional elements configured to modify or moderate the pressure applied by the expandable medium 120, such as, but not limited to, one or more instances of a volumetrically invariant element 172 (e.g., a substantially noncompressible element), and/or one or more instances of a contractible element 174 (e.g., a fluid-filled bladder), which can be increased in volume before or during bonding and/or reduced in volume after bonding.

As illustrated in Fig. 1, in one or more examples, the system 100 includes at least one instance of the expandable element 176. In one or more examples, the expandable element 176 is situated within the interior volume 116 of the constraining container 110 with the expandable medium 120 and the workpiece 200. In one or more examples, the expandable element 176 is a volume modifying component of the system 100 that is configured to be selectively expanded and/or contracted to selectively decrease or increase the interior volume 116 of the constraining container 110 available to be filled by the expandable medium 120 during expansion. In one or more examples, the expandable element 176 includes or takes the form of an enclosed bladder or balloon with some type of expandable material (e.g., expandable medium 120). In one or more examples, a chemical (e.g., baking soda powder) can be loaded within a balloon. After heating the chemical and generating a gas, the balloon will expand and decrease the fillable volume of (interior volume 116) of the constraining container 110 and/or apply additional positive pressure in the constrained space. In other examples, the expandable element 176 is an example of one of the different types of the expandable medium 120.

As illustrated in Figs. 1 and 15, in one or more examples, the system 100 includes at least one instance of an intensifier 178. In one or more examples, the intensifier 178 is situated within the interior volume 116 of the constraining container 110 with the expandable medium 120 and the workpiece 200. In one or more examples, the intensifier 178 is another type or instance of the expandable medium 120 or a different type of expandable material. In one or more examples, the intensifier 178 is selectively expandable to increase or intensify the pressure applied to the workpiece 200 at one or more locations. As an example, the intensifier 178 can be positioned proximate (e.g., at or near) a predetermined location or area of the workpiece 200, such as a cavity or contour between different portions of the workpiece 200) such that an intensified pressure is applied to the radius of the contour during bonding.

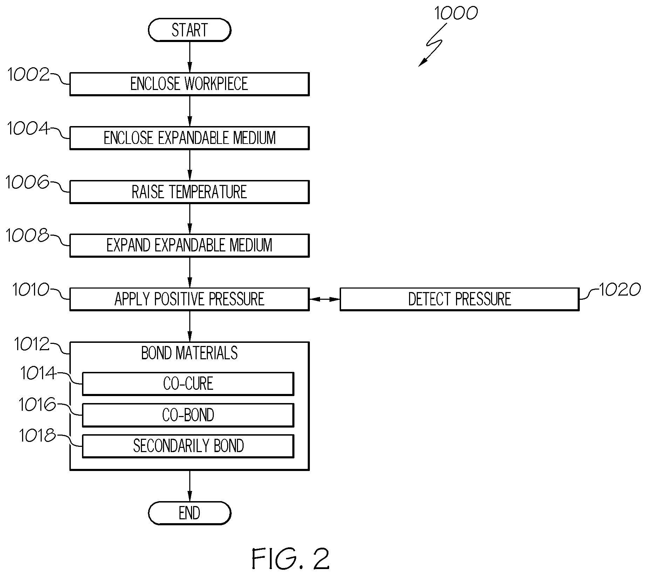

Referring now to Fig. 2, the following are examples of the method 1000, according to the present disclosure. In one or more examples, the method 1000 is implemented using the system 100 (Fig. 1). Examples of the method 1000 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 1000 includes a step of enclosing 1002 at least the portion 210 of the workpiece 200, such as at least a portion of the first material 204 and the second material 206, within the interior volume 116 of the constraining container 110. In one or more examples, the materials 202 of a discrete portion of the workpiece 200 is to be bonded. In these examples, the base 112 and the cover 114 of the constraining container 110 are positioned to enclose the portion 210 of the workpiece 200 to be bonded. In one or more examples, the materials 202 of an entirety of the workpiece 200 is to be bonded. In these examples, the entirety of the workpiece 200 is positioned (e.g., loaded) within the interior volume 116 of the constraining container 110.

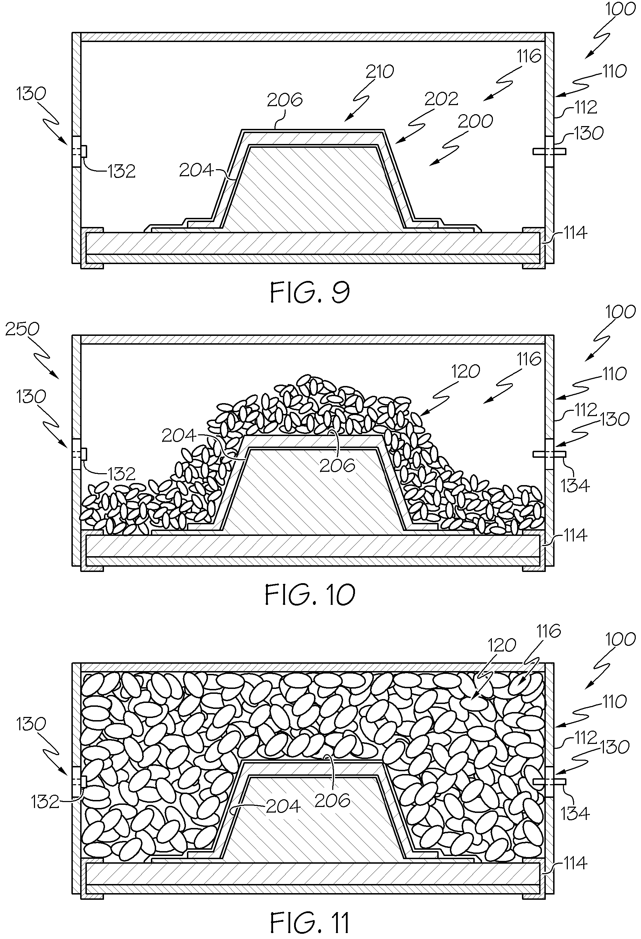

In one or more examples, the method 1000 includes a step of enclosing 1004 the expandable medium 120 within the interior volume 116 of the constraining container 110. In one or more examples, the workpiece 200 and the expandable medium 120 can be enclosed within the constraining container 110 together. In one or mor examples, a predetermined amount of the expandable medium 120 in the unexpanded state is loaded or otherwise applied within the constraining container 110 around (e.g., surrounding at least a portion of) the workpiece 200. As illustrated in Figs. 9-12, in one or more examples, the expandable medium 120 is generally positioned on one side of the workpiece 200 such that the workpiece 200 is compressed or compacted between the expandable medium 120 and another underlying or backup structure (e.g., the base 112) during bonding. As illustrated in Figs. 12-15, in one or more examples, the expandable medium 120 is generally positioned on more than one side (e.g., both opposing sides) of the workpiece 200 such that the workpiece 200 is compressed or compacted between a first volume of the expandable medium 120 and an opposing second volume of the expandable medium 120 during bonding.

In one or more examples, the method 1000 includes a step of raising 1006 the temperature. In one or more examples, the temperature of the expandable medium 120 is raised to the activation temperature 122. In one or more examples, the temperature of the workpiece 200 is raised to a proper processing temperature to facilitate bonding of the materials 202.

In one or more examples, the method 1000 includes a step of expanding 1008 the expandable medium 120, which is disposed within the interior volume 116. In one or more examples, the expandable medium 120 is expanded in response to changing the attribute 126 of the expandable medium 120. In one or more examples, the expandable medium 120 is expanded in response to raising the temperature of the expandable medium 120 to the activation temperature 122.

In one or more examples, the method 1000 includes a step of applying 1010 the positive pressure 124 to the constraining container 110 and to the workpiece 200, such as at least one of the first material 204 and the second material 206. The positive pressure 124 is applied to the workpiece 200 in response to expanding the expandable medium 120. Upon expansion, the expandable medium 120 fills the interior volume 116 and applies the positive pressure 124 to the workpiece 200.

In one or more examples, expansion of the expandable medium 120 applies an omni-directional force on at least one surface or portion of the workpiece 200. As illustrated in Figs. 3-12, in one or more examples, the expansion of the expandable medium 120 applies a bonding force (e.g., positive pressure 124) on one side of the workpiece 200 such that the workpiece 200 is compressed or compacted between the expandable medium 120 and the base 112. As illustrated in Figs. 13-15, in one or more examples, the expansion of the expandable medium 120 applies a bonding force (e.g., positive pressure 124) on more than one side (e.g., both opposing sides) of the workpiece 200 such that the workpiece 200 is compressed or compacted between a first volume of the expandable medium 120 and an opposing second volume of the expandable medium 120 during bonding.

In one or more examples, the method 1000 includes a step of bonding 1012 the materials 202, such as at least the first material 204 and the second material 206, together. In one or more examples, according to the method 1000, the step of bonding 1012 includes a step of co-curing 1014 the materials 202 (e.g., first material 204 and second material 206) together. In one or more examples, according to the method 1000, the step of bonding 1012 includes a step of co-bonding 1016 the materials 202 (e.g., first material 204 and second material 206) together. In one or more examples, according to the method 1000, the step of bonding 1012 includes a step of secondarily bonding 1018 the materials 202 (e.g., first material 204 and second material 206) together.

In one or more examples, according to the method 1000, the first material 204 and the second material 206 include the uncured composite material 212. The uncured composite material 212 has one of the cure temperature 220 (e.g., thermoset composite material) or the consolidation temperature 224 (e.g., thermoplastic composite material). In these examples, bonding can be achieved by co-curing, with or without adhesives.

In one or more examples, according to the method 1000, the first material 204 includes the cured composite material 214. The second material 206 includes the uncured composite material 212. The uncured composite material 212 has one of the cure temperature 220 (e.g., thermoset composite material) or the consolidation temperature 224 (e.g., thermoplastic composite material). In these examples, bonding can be achieved by co-bonding.

In one or more examples, according to the method 1000, the first material 204 and the second material 206 include any one of various material compositions, other than the uncured composite material 212, and the adhesive 216. In these examples, bonding can be achieved by secondary bonding.

In one or more examples, the cure temperature 220 of the uncured composite material 212 (e.g., thermoset composite material) is equal to or greater than the activation temperature 122. In one or more examples, the uncured composite material 212 has the cure pressure 222 (e.g., a pressure required for adequate curing and/or bonding of the uncured composite material) that is equal to or less than the positive pressure 124.

In one or more examples, the consolidation temperature 224 of the uncured composite material 212 (e.g., thermoplastic composite material) is equal to or greater than the activation temperature 122. In one or more examples, the uncured composite material 212 has the consolidation pressure 226 (e.g., a pressure required for adequate consolidation and bonding of the uncured composite material) that is equal to or less than the positive pressure 124.

In one or more examples, according to the method 1000, the adhesive 216 is situated between the materials 202 (e.g., the first material 204 and the second material 206). The adhesive 216 has the cure temperature 220. The cure temperature 220 of the adhesive 216 is equal to or greater than the activation temperature 122. In one or more examples, the adhesive 216 has the cure pressure 222 (e.g., a pressure required for adequate bonding of the adhesive material) that is equal to or less than the positive pressure 124.

In one or more examples, the method 1000 includes a step of detecting 1020 the interior pressure 118 within the interior volume 116. In these examples, the interior pressure 118 is detected using the pressure detector 130. In one or more examples, the interior pressure 118 is monitored (e.g., in real time) by the sensor 132. In one or more examples, a pressure failsafe is provided by the pin 134.

Referring again to Fig. 1, the following are examples of the workpiece 200, according to the present disclosure. In one or more examples, the workpiece 200 is bonded to form a bonded structure using the system 100 and/or according to the method 1000 (Fig. 2). Examples of the workpiece 200 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the workpiece 200 is a bonded workpiece or forms a bonded structure. The workpiece 200 includes a number of materials 202, such as at least the first material 204 and second material 206, to be bonded together. At least a portion of the first material 204 and the second material 206 is enclosed by the constraining container 110. The expandable medium 120 is disposed within the interior volume 116 of the constraining container 110 between the constraining container 110 and at least one of the first material 204 and the second material 206. The expandable medium 120 is configured to expand to a predetermined volume when a predetermined change is produced in the attribute 126 of the expandable medium 120 such that the expandable medium 120 applies the positive pressure 124 to the constraining container 110 and at least one of the first material 204 and the second material 206.

In one or more examples of the workpiece 200, the first material 204 and the second material 206 include the uncured composite material 212 (e.g., thermoset composite material) having the cure temperature 220 and the cure pressure 222. In these examples, the expandable medium 120 is configured to expand when the temperature of the expandable medium 120 is raised to the activation temperature 122 that is up to the cure temperature 220 and to apply the positive pressure 124 that is up to or greater than the cure pressure 222.

In one or more examples of the workpiece 200, the first material 204 and the second material 206 include the uncured composite material 212 (e.g., thermoplastic composite material) having the consolidation temperature 224 and the consolidation pressure 226. In these examples, the expandable medium 120 is configured to expand when the temperature of the expandable medium 120 is raised to the activation temperature 122 that is up to the consolidation temperature 224 and to apply the positive pressure 124 that is up to or greater than the consolidation pressure 226.

In one or more examples of the workpiece 200, the first material 204 includes the cured composite material 214. In one or more examples, the second material 206 includes the uncured composite material 212 (e.g., thermoset composite material) having the cure temperature 220 and the cure pressure 222. In these examples, the expandable medium 120 is configured to expand when the temperature of the expandable medium 120 is raised to the activation temperature 122 that is up to the cure temperature 220 and to apply the positive pressure 124 that is up to or greater than the cure pressure 222. In one or more examples, the second material 206 includes the uncured composite material 212 (e.g., thermoplastic composite material) having the consolidation temperature 224 and the consolidation pressure 226. In these examples, the expandable medium 120 is configured to expand when the temperature of the expandable medium 120 is raised to the activation temperature 122 that is up to the consolidation temperature 224 and to apply the positive pressure 124 that is up to or greater than the consolidation pressure 226.

In one or more examples, the workpiece 200 includes the adhesive 216. The adhesive 216 is situated between at least two of the materials 202 of the workpiece 200, such as between the first material 204 and the second material 206. The adhesive 216 has at least one of the cure temperature 220 and the cure pressure 222. The expandable medium 120 is configured to expand when the temperature of the expandable medium 120 is raised to the activation temperature 122 that is up to the cure temperature 220. At the activation temperature 122, the expandable medium 120 is configured to expand such that the positive pressure 124 is up to the cure pressure 222.

As illustrated in Figs. 1, 4, 7, 10 and 12-15, in one or more examples, a workpiece assembly 250 includes the workpiece 200 and the system 100. The workpiece 200 is disposed within the constraining container 110. The constraining container 110 is configured to enclose the portion 210 of the workpiece 200. In an example, the portion 210 of the workpiece 200 is covered or otherwise enclosed by constraining container 110. The constraining container 110 is constructed to facilitate the application of pressure upon the surface of the workpiece 200 by the expansion of the expandable medium 120. In one or more examples, the workpiece 200 is disposed on the base 112 or is otherwise supported from a position opposite the cover 114 and the direction of the positive pressure 124 by a reinforcement as needed.

As illustrated in Figs. 4, 7, 10 and 12-15, in one or more examples, the expandable medium 120 is added to the interior volume 116. A suitable amount of the expandable medium 120 is used such that, during and/or after expansion, the expandable medium 120 contacts both the workpiece 200 and inner surfaces of the constraining container 110 to generate and apply the positive pressure 124 upon the one or more surfaces of the workpiece 200.

The expandable medium 120 can take any suitable form. In one or more examples, the expandable medium 120 is added to within the constraining container 110, for example, as pellets, beads, grains, powder, or foam. Alternatively, or in addition, the expandable medium 120 is added to the constraining container 110 as discrete portions of a solid or semi-solid, such as layers of the expandable medium 120 that can be draped across the portion 210 of the workpiece 200. Layers of the expandable medium 120 can be added by adding individual instances of the encapsulating element 168 (e.g., sacks or bags) filled with pellets, beads, or other smaller portions of the expandable medium 120. Although Figs. 3-15 depict the expandable medium 120 as a plurality of the expandable pellets 162, this is a representative depiction and should not be considered to limit the structure or configuration of the expandable medium 120.

In various examples, the expandable medium 120 is added to the interior volume 116 of the constraining container 110 while in the unexpanded state. As illustrated in Figs. 4, 5, 7, 8, 10 and 11, prior to and/or during the bonding process, the expandable medium 120 is made to expand (e.g., to increase in volume) to at least partially fill the interior volume 116, such that the expandable medium 120 (in the expanded state) applies positive pressure directly or indirectly to at least some inner surfaces of the constraining container 110 as well as the surface (e.g., outer surfaces) of the workpiece 200. The pressure exerted by the expandable medium 120 as it expands thereby helps to compress and consolidate the portion 210 of the workpiece 200 as it is bonded.

In various examples, the expandable medium 120 is configured to expand (e.g., to a predetermined volume and/or pressure) when a predetermined change is produced in an attribute 126 of the expandable medium 120 (e.g., in the unexpanded state). In one or more examples, the expandable medium 120 is applied (e.g., inserted or added) within the interior volume 116 of the constraining container 110 in the unexpanded state. The predetermined change is produced in the attribute 126 of the expandable medium 120 in the unexpanded condition, while the expandable medium 120 (in the unexpanded condition) is within the interior volume 116. The expandable medium 120 expands in response to the produced predetermined change. The attribute 126 of the expandable medium 120 can be a physical and/or chemical attribute.

In one or more examples, the expandable medium 120 is configured to expand in volume when it interacts with water. As an example, the expandable medium 120 is or includes a desiccant, the desiccant can increase in volume as water is absorbed. For example, anhydrous calcium sulfate (anhydrite) exhibits an increase in volume of approximately sixty one percent (61%) when it absorbs water to form gypsum. In these examples, water can be added to the expandable medium 120 directly, such as by adding liquid water or water vapor to the interior of the constraining container 110. Alternatively, or in addition, water or water vapor can be generated within the constraining container 110 itself, for example by an appropriate chemical reaction.

In one or more examples, the predetermined change in the attribute 126 of the expandable medium 120 includes a change in the temperature of expandable medium 120 and/or the temperature of one or more portions of the expandable medium 120. Accordingly, producing the predetermined change in the attribute 126 of expandable medium 120 can include raising the temperature of the unexpanded expandable element from a lower temperature, such as an ambient temperature (e.g., room temperature), to at least a predetermined temperature greater than the initial or ambient temperature (e.g., the predetermined temperature is a number of degrees above the ambient temperature suitable to produce a predetermined expansion of the expandable element). The expandable element then undergoes thermal expansion as a result of the increase in temperature.

In one or more examples, the expandable medium 120 is a thermally activated expandable element. In these examples, the thermally activated expandable element is configured to expand when the temperature of the expandable medium 120 is raised to at least a predetermined temperature. Alternatively, or in addition, expanding the expandable medium 120 by heating the expandable medium 120 to at least a predetermined temperature produces a predetermined pressure against the workpiece 200. Typically, the predetermined pressure is a pressure sufficient to adequately cure the composite material.

In one or more examples, the predetermined change produced in the attribute 126 of the expandable medium 120 is a combination of two or more properties of the expandable medium 120, such as a ratio or a product of quantitative values associated with properties of the expandable medium 120, such as two materials that have different coefficients of thermal expansion.

In various examples, the process of bonding the workpiece 200 includes producing the predetermined change in the attribute 126 of the expandable medium 120. In one or more examples, expansion of the expandable medium 120 occurs automatically during the bonding process. For example, the attribute 126 can be a temperature of the expandable medium 120, and heat that is applied to workpiece assembly 250 during the bonding process produces the predetermined change in the temperature of the expandable medium 120. That is, heat applied to the workpiece assembly 250 during the bonding process raises the temperature of the expandable medium 120 to at least a predetermined temperature associated with a desired volume and/or desired increase in volume. One or more properties of the expandable medium 120 can be designed such that the temperature change induced in the expandable medium 120 during bonding of the workpiece 200 causes the expandable medium 120 to expand a desired predetermined amount as a result of thermal expansion. Alternatively, or additionally, causing the expandable medium 120 to expand can require additional steps beyond those required to cure the workpiece 200. As an example, causing the expandable medium 120 to expand can include applying an electric field, injecting a liquid, gas, and/or another suitable material, and/or inducing any other suitable change in the expandable medium 120.

In various examples, the expandable medium 120 is thermally expandable and includes any material capable of undergoing expansion when the predetermined temperature is reached. In a particular example, a family of plastic polymers capable of softening when heated are called thermoplastic materials. When heated above its glass transition temperature and below its melting point, a solid thermoplastic material softens, becoming a viscous liquid. In this state, thermoplastics can be reshaped, and more specifically, can be expanded.

A variety of classes of thermoplastic materials are known, including acrylic polymers, acrylonitrile butadiene styrene (ABS) polymers, nylon polymers, polylactic acid (PLA) polymers, polybenzimidazole polymers, polycarbonate polymers, polyether sulfone (PES) polymers, polyetherimide (PEI) polymers, polyethylene (PE) polymers, polyphenylene oxide (PPO) polymers, polyphenylene sulfide (PPS) polymers, polyvinyl chloride (PVC) polymers, polyvinylidene fluoride (PVDF) polymers, and polytetrafluoroethylene (PTFE) polymers, among others. In particular, the expandable medium 120 that includes acrylonitrile butadiene styrene (ABS) polymers can exhibit favorable physical properties when used in conjunction with the examples described herein.

In one or more examples, the expandable medium 120 (e.g., the expandable pellets 162) can additionally include a blowing agent. The blowing agent is selected so that, when heated to at least a predetermined temperature, it forms a plurality of holes, pockets, or voids within the material of the expandable medium 120, such that the volume of the expandable medium 120 increases. As an example, an appropriate blowing agent can be an inert gas that is permeated into the expandable medium 120 under pressure. Such a blowing agent can be configured to expand in a plurality of locations within the expandable medium 120 when the temperature of the expandable medium 120 is increased from an ambient or initial temperature to a predetermined higher temperature, and the expanded gas forms holes, pockets, or voids within the pellet. A blowing agent, if present, can be applied to the expandable medium 120 prior to heating.

In examples in which the expandable medium 120 includes a blowing agent, the blowing agent can be any appropriate substance capable of producing the desired degree of expansion. The blowing agent may include a physical blowing agent such as a chlorofluorocarbon, a hydrochlorofluorocarbon, a hydrocarbon, or liquid CO2, among others. Alternatively, or in addition, the blowing agent may include a chemical blowing agent selected to react with one or more components of the expandable medium 120, such as isocyanate and water for polyurethane, azodicarbonamide for vinyl, hydrazine and other nitrogen-based materials for thermoplastic and elastomeric foams, and sodium bicarbonate for thermoplastic foams, among others.

In examples in which the expandable medium 120 includes a blowing agent, the blowing agent can include a foaming agent. In these examples, the blowing agent can be selected to form a gas, the foaming agent can be a material that facilitates formation of a foam, such as for example, a surfactant. Suitable foaming agents can include sodium laureth sulfate, sodium lauryl ether sulfate (SLES), sodium lauryl sulfate (also known as sodium dodecyl sulfate or SDS), and ammonium lauryl sulfate (ALS), among others.

During the process of bonding the workpiece 200, the expandable medium 120 (e.g., expandable pellets 162) are made to expand from the unexpanded state (Figs. 5 and 7) to the expanded state (Figs. 6 and 8). In one or more examples, the expandable pellets 162 are configured to expand in response to heat applied to the workpiece assembly 250 during bonding. The expandable pellets 162 expand to fill the interior volume 116 of the cover 114, such that the expanded expandable pellets 162 apply positive pressure to workpiece 200 and the workpiece 200 is cured.

In one or more examples, the expandable medium 120 (e.g., the expandable pellets 162) are configured (e.g., formulated) so that it is at least partially deformable after, during, and/or before expansion. A degree of deformability allows the expandable medium 120 to squeeze into small gaps that might otherwise exist, for example, between pellets, between pellets and inner surfaces of the cover 114, and/or between pellets and the workpiece 200. Filling such gaps allows the expandable medium 120 to present a substantially smooth surface to the workpiece 200.

In various examples, after the portion 210 of the workpiece 200 has been cured, the cover 114 can be unsealed, opened, or removed, as needed, and the expandable medium 120 can be removed. Although the expandable medium 120 is typically readily removable after the workpiece 200 has been cured, in some instances, the expandable medium 120 may remain expanded and tightly packed after the workpiece 200 has been cured and cooled, which may tend to impede removal. In such cases, the expandable medium 120 can be additionally configured in one or more ways to be more easily separated from the workpiece 200, the base 112, and/or the cover 114. As an example, the expandable pellets 162 can be configured so that their shape and/or size can be changed when desired, such that that they can be more readily extracted. For example, the expandable pellets 162 can be configured to shrink when cooled, so that after the workpiece 200 is cured and cooled, the expandable pellets 162 shrink in the interior volume 116, thereby facilitating their removal.

In one or more examples, the expandable medium 120 is modified to minimize sintering (self-adhesion) upon heating and expansion. Alternatively, or in addition, the expandable medium 120 is configured to minimize potential adhesion with surfaces, such as by coating the expandable pellets 162 with a suitable agent configured to prevent adhesion and/or to facilitate separation.

In one or more examples, a suitable agent for adding to the expandable medium 120 includes a lubricating agent. As an example, a lubricating agent can be added to the expandable pellets 162 to decrease adhesion between the expandable pellets 162 before and/or after volumetric expansion. A suitable lubricating agent is one that does not interfere with curing and/or bonding of the workpiece 200 and prevents the expandable pellets 162 from substantially adhering to one another, to the constraining container 110, or to the components of the workpiece assembly 250. Suitable lubricating agents can include liquids, powders, or combinations thereof. When added as a powder, a suitable lubricating agent can include a nano-powder. Alternatively, or in addition, suitable lubricating agents can include silicon-based materials, fluorinated polymers, or other substantially inert substances. For example, a suitable lubricating agent can include polytetrafluoroethylene (PTFE) powder, PTFE nano-powder, silicone, perfluoropolyether (PFPE), perfluoroalkylether (PFAE), perfluoropolyalkylether (PFPAE), and/or the like. Such a lubricant can be applied to the expandable pellets 162 before the expandable pellets 162 are added into the constraining container 110. Alternatively, or additionally, a suitable lubricant can be applied to the expandable pellets 162 while they are disposed inside the constraining container 110. Coating at least some of the expandable pellets 162 with a suitable lubricant can include mixing the lubricant with the plurality of pellets and/or pouring the lubricant over the plurality of pellets. Additionally, or alternatively, at least a subset of the plurality of expandable pellets 162 can be coated with a desired lubricant and then mixed in with a plurality of uncoated pellets.

In one or more examples, crystallinity and/or semi-crystallinity along the outer surfaces of the expandable pellets 162 can help to prevent the pellets from sintering to each other. In one or more examples, at least some of the expandable pellets 162 are configured, such as by preprocessing, to have regions of crystallinity along outer surfaces of the pellets, such that adding the expandable medium 120 includes adding a plurality of the expandable pellets 162 having surface regions of increased crystallinity in order to decrease adhesion between pellets before and/or after volumetric expansion of the expandable pellets 162. In one or more examples, the expandable pellets 162 can be employed where outer surfaces of the pellets exhibit a high degree of crystallinity (e.g., a high percentage of the volume of regions of each pellet near the outer surface is crystalline). The crystallinity can be induced in the expandable pellets 162 by controlling one or more factors including the material composition of the pellets, the production temperatures to which the pellets are heated during production, the times for which the pellet temperatures are maintained at the production temperatures during production, electric and/or magnetic fields applied during production, distribution of a blowing agent in the pellets, composition and/or concentration of blowing agent, and so on. The outer surfaces of the expandable pellets 162 can be crystalline before foaming, during foaming, and/or after foaming.

As illustrated and described herein, examples of the system 100 and method 1000 provide a number of advantages and benefits over traditional bonding techniques. Examples of the system 100 and method 1000 enable composite bonding under pressure, co-bonding where at least one side is pre-cured, and secondary bonding of non-composite materials (metal, ceramic, hybrid, MMC, CMC, etc.) by using epoxy adhesive or any polymer adhesive (thermoset or thermoplastic). Examples of the system 100 and method 1000 enable gradual and controllable compaction instead of catastrophic high pressure. This eliminates the need to have a highpressure gas tank and/or storage unit. This also enables controlled failure mode or fail-safe design. Examples of the system 100 and method 1000 enable convenient and portable or modular tooling applications that include a heating element and compaction apparatus that can be integrated in the same tooling. This eliminates the need for extra heating equipment. Examples of the system 100 and method 1000 facilitate a targeted thermal environment in which foam can be used as an insulation layer in case it is necessary to isolate heat from certain areas of the workpiece 200. This enables adaptable thermal management and/or a one-sided heating configuration (e.g., from prepreg to pre-cured). Examples of the system 100 and method 1000 enable bonding of the workpiece 200 (especially for co-bond or secondary bonding scenarios) with in-situ tooling. Examples of the system 100 and method 1000 enable use of a wide range of expandable materials, not necessarily foaming materials, such as a bladder or other soft materials with high coefficients of thermal expansion (CTE). Examples of the system 100 and method 1000 enable application of pressure in all directions (in comparison with hot press, etc.). Examples of the system 100 and method 1000 enable heat transfer to be controlled by various heating configurations. Examples of the system 100 and method 1000 enable stress annealing that can mitigate the localized stress concentration with continuous pressure from the expandable medium 120. Examples of the system 100 and method 1000 enable control of the pressure distribution for structural bonding, for example, pressure can be uniform or can be localized by using segregated pressure compartments (e.g., different design geometry and/or different expandable materials) within one constraining container. Examples of the system 100 and method 1000 can be sustainable by using reusable expandable materials, by saving equipment footprint, reducing dependency on sources such as energy, waste handling, etc. Examples of the system 100 and method 1000 enable adhesive and/or air squeeze-out, thus reducing the porosity in the bonding lines. Examples of the system 100 and method 1000 enable higher pressure than normal (>100 psi) for thermoplastic composite applications. Examples of the system 100 and method 1000 enable continuous high pressure on extremely smooth surfaces (e.g., metal or composite). Examples of the system 100 and method 1000 enable a pre-compaction force before the final bond or final cure. Examples of the system 100 and method 1000 enable hybrid bonding. Examples of the system 100 and method 1000 enable use of expandable material that can be mixed in the adhesive, functioning as a bond line controller, such as glass beads, to ensure uniform bonding and deliberately control the difference between the bonding surfaces.

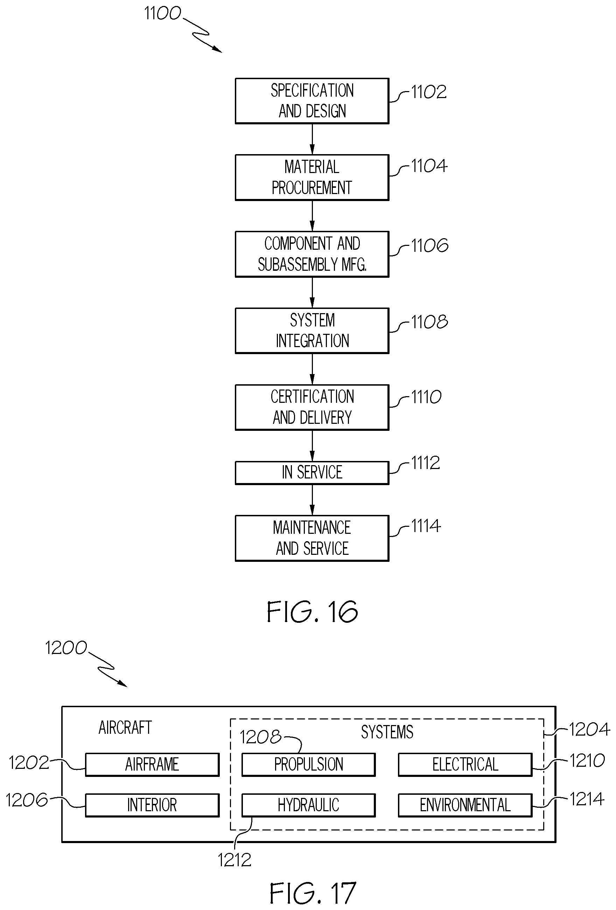

Referring now to Figs. 14 and 15, examples of the system100, the method 1000, and the workpiece 200, described herein, may be related to, or used in the context of, the aerospace manufacturing and service method 1100, as shown in the flow diagram of Fig. 16 and an aircraft 1200, as schematically illustrated in Fig. 17 As an example, the aircraft 1200 and/or the manufacturing and service method 1100 may utilize a bonded structure (e.g., workpiece 200) fabricated using the system 100 and/or according to the method 1000.

Referring to Fig. 17, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems, such as, but not limited to, communications systems, avionics systems, software distribution systems, network communications systems, passenger information/entertainment systems, guidance systems, radar systems, weapons systems, and the like. The aircraft 1200 can have any number of components that include the workpiece 200, which is fabricated, manufactured, bonded, and/or installed using the system 100 and/or according to the method 1000.

Referring to Fig. 16, during pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 14 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the system 100, method 1000, and workpiece 200, shown and described herein, may be employed during any one or more of the stages of the manufacturing and service method 1100 shown in the flow diagram illustrated by Fig. 16. In an example, components of the aircraft 1200 including the workpiece 200 can be fabricated, manufactured, bonded, and/or installed using the system 100 and/or according to the method 1000 during a portion of component and subassembly manufacturing 1106 and/or system integration 1108. Further, components of the aircraft 1200 including the workpiece 200 can be fabricated, manufactured, bonded, and/or installed using the system 100 and/or according to the method 1000 while the aircraft 1200 is in service 1112. Also, components of the aircraft 1200 including the workpiece 200 can be fabricated, manufactured, bonded, and/or installed using the system 100 and/or according to the method 1000 during system integration 1108 and certification and delivery 1110. Similarly, components of the aircraft 1200 including the workpiece 200 can be fabricated, manufactured, bonded, and/or installed using the system 100 and/or according to the method 1000 while the aircraft 1200 is in service 1112 and during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1, 3-15 and 17, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1, 3-15 and 17, referred to above, need be included in every example and not all elements, features, and/or components described herein are necessarily depicted in each illustrative example. Accordingly, some of the elements, features, and/or components described and illustrated in Figs. 1, 3-15 and 17 may be combined in various ways without the need to include other features described and illustrated in Figs. 1, 3-15 and 17, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1, 3-15 and 17, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1, 3-15 and 17, and such elements, features, and/or components may not be discussed in detail herein with reference to each of Figs. 1, 3-15 and 17. Similarly, all elements, features, and/or components may not be labeled in each of Figs. 1, 3-15 and 17, but reference numerals associated therewith may be utilized herein for consistency.

In Figs. 2 and 16, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2 and 16 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100, the method 1000, and the workpiece 200 have been shown and described, modifications may occur to those skilled in the art upon reading the specification. The present application includes such modifications and is limited only by the scope of the claims.

## Claims

1. A system (100) for bonding materials (202), the system (100) comprising:
a constraining container (110) comprising a base (112) and a cover (114) and having an interior volume (116), wherein the constraining container (110) is configured to enclose at least a portion of a first material (204) and a second material (206) being bonded; and
an expandable medium (120) configured to be disposed within the interior volume (116) between at least a portion of the constraining container (110) and at least one of the first material (204) and the second material (206) and to expand such that the expandable medium (120) applies positive pressure (124) to the constraining container (110) and at least one of the first material (204) and the second material (206).

2. The system (100) of Claim 1, wherein at least one of the base (112) and the cover (114) is rigid.

3. The system (100) of Claim 1 or 2, wherein at least a portion of at least one of the base (112) and the cover (114) is flexible.

4. The system (100) of any one of Claims 1-3, wherein:
the first material (204) and the second material (206) comprise an uncured composite material (212) having a cure temperature (220); and
the expandable medium (120) is configured to expand when a temperature of the expandable medium (120) is raised to an activation temperature (122) up to the cure temperature (220).

5. The system (100) of any one of Claims 1-4, wherein:
the first material (204) comprises a cured composite material (214);
the second material (206) comprises an uncured composite material (212) having a cure temperature (220); and
the expandable medium (120) is configured to expand when a temperature of the expandable medium (120) is raised to an activation temperature (122) up to the cure temperature (220).

6. The system (100) of any one of Claims 1-5, wherein:
an adhesive (216) is situated between the first material (204) and the second material (206);
the adhesive (216) has at least one of a cure temperature (220) and a cure pressure (222);
the expandable medium (120) is configured to expand when a temperature of the expandable medium (120) is raised to an activation temperature (122) up to the cure temperature (220); and
the positive pressure (124) is up to the cure pressure (222).

7. The system (100) of any one of Claims 1-6, further comprising a pressure detector (130) configured for detecting an interior pressure within the interior volume (116).

8. The system (100) of any one of Claims 1-7, further comprising a heater (140) in thermal communication with the expandable medium (120).

9. A method (1000) for bonding materials (202), the method (1000) comprising:
enclosing (1002) at least a portion of a first material (204) and a second material (206) within an interior volume (116) of a constraining container (110);
expanding (1008) an expandable medium (120) disposed within the interior volume (116);
applying (1010) a positive pressure (124) to the constraining container and at least one of the first material (204) and the second material (206) in response to expanding the expandable medium (120); and
bonding (1012) the first material (204) and the second material (206) together.

10. The method (1000) of Claim 9, wherein bonding (1012) comprises co-curing (1014) the first material (204) and the second material (206), optionally:
the method further comprising raising a temperature of the expandable medium (120) to an activation temperature (122),
wherein the first material (204) and the second material (206) comprise an uncured composite material (212) having a cure temperature (220) that is equal to or greater than the activation temperature (122).

11. The method (1000) of Claim 9 or 10, wherein bonding (1012) comprises co-bonding (1016) the first material (204) and the second material (206), optionally:
the method further comprising raising a temperature of the expandable medium (120) to an activation temperature (122),
wherein:
the first material (204) comprises a cured composite material (214); and
the second material (206) comprises an uncured composite material (212) having a cure temperature (220) equal to or greater than the activation temperature (122).

12. The method (1000) of any one of Claims 9-11, wherein bonding (1012) comprises secondarily bonding (1018) the first material (204) and the second material (206), optionally:
the method further comprising raising a temperature of the expandable medium (120) to an activation temperature (122),
wherein:
an adhesive (216) is situated between the first material (204) and the second material (206); and
the adhesive (216) has at least one of a cure temperature (220) that is equal to or greater than the activation temperature (122) and a cure pressure (222) that is equal to or greater than the positive pressure (124).

13. The method (1000) of any one of Claims 9-12, further comprising detecting (1020) an interior pressure (118) within the interior volume (116).

14. A workpiece (200) comprising:
a first material (204) and a second material (206) to be bonded together by means of a system (100) for bonding materials (202) according to any one of claims 1-8,
wherein:
at least a portion of the first material (204) and the second material (206) of the workpiece (200) is enclosed by the constraining container (110) of the system (100);
the expandable medium (120) of the system (100) is disposed within the interior volume (116) of the constraining container (110) between the constraining container (110) and at least one of the first material (204) and the second material (206); and
the expandable medium (120) is configured to expand to a predetermined volume when a predetermined change is produced in an attribute (126) of the expandable medium (120) such that the expandable medium (120) applies positive pressure (124) to the constraining container (110) and at least one of the first material (204) and the second material (206).

15. The workpiece (200) of Claim 14, further comprising an adhesive (216) situated between the first material (204) and the second material (206),
wherein:
the adhesive (216) has at least one of a cure temperature (220) and a cure pressure (222);
the expandable medium (120) is configured to expand when a temperature of the expandable medium (120) is raised to an activation temperature (122) up to the cure temperature (220); and
the positive pressure (124) is up to the cure pressure (222).
